# EUROPÄISCHE PATENTSCHRIFT

(11) **EP 2 503 187 B1**
(45) Veröffentlichungstag und Bekanntmachung des Hinweises auf die Patenterteilung: **09.05.2018**
(21) Anmeldenummer: 11159860.3
(22) Anmeldetag: 25.03.2011
(51) Int. Cl.: F16H 47/02, F16H 61/30

(54) **Antriebseinrichtung für eine selbstfahrende Arbeitsmaschine und das entsprechende Verfahren zum Betreiben dieser Antriebseinrichtung.**
Drive assembly for a self-propelled work machine and the corresponding operating method.
Dispositif d'entraînement pour un engin automobile et la méthode correspondante pour l'opérer.

(43) Veröffentlichungstag der Anmeldung: 26.09.2012
(73) Patentinhaber: NAF Neunkirchener Achsenfabrik AG, 91077 Neunkirchen (DE)
(72) Erfinder: Schnabel, Bernhard, 82319 Starnberg (DE)
(74) Vertreter: Hofstetter, Schurack & Partner

(56) Entgegenhaltungen:
- EP-A1- 1 600 666
- EP-A1- 2 202 413
- DE-A1- 1 555 247
- DE-U1-202004 009 821

## Beschreibung

Die Erfindung betrifft eine Antriebseinrichtung der im Oberbegriff des Patentanspruchs 1 angegebenen Art für eine selbstfahrende Arbeitsmaschine. Die Erfindung betrifft weiterhin eine selbstfahrende Arbeitsmaschine mit einer Antriebseinrichtung sowie ein Verfahren zum Betreiben einer Antriebseinrichtung einer selbstfahrenden Arbeitsmaschine.

Herkömmliche Antriebseinrichtungen für fahrbare Arbeitsmaschinen werden von Hydromotoren angetrieben. Der Arbeitsbereich eines Hydromotors lässt es jedoch in der Regel nicht zu, das gesamte Fahrspektrum der Arbeitsmaschinen von maximaler Zugkraft bei kleinen Geschwindigkeiten bis zur maximalen Fahrgeschwindigkeit abzudecken. Deshalb weisen herkömmliche Antriebseinrichtungen zwei Schaltzustände auf, von denen der erste Schaltzustand mit größerer Übersetzung für langsame Geschwindigkeiten und große Zugkräfte und der zweite Schaltzustand mit geringerer Übersetzung für schnelle Geschwindigkeiten und geringere Zugkräfte ausgelegt sind. Üblicherweise bleibt ein Hydromotor dabei mit konstanter Übersetzung permanent eingekuppelt und deckt den gesamten Geschwindigkeitsbereich bei geringer Zugkraft ab. Ein zweiter Hydromotor ist zur Drehmomentenaddition mit größerer Übersetzung angebunden, um große Zugkräfte bei kleinen Geschwindigkeiten zu ermöglichen. Wegen der größeren Übersetzung erreicht der zweite Hydromotor jedoch bereits bei relativ geringer Geschwindigkeit seine Drehzahlgrenze und muss daher bei größeren Geschwindigkeiten ausgekoppelt werden. Der Wechsel der Schaltzustände ist bei vielen Antriebseinrichtungen jedoch nur im Stillstand möglich.

Es existieren verschiedene Konzepte, um ein Durchfahren des gesamten Geschwindigkeitsbereichs ohne Unterbrechung der Zugkraft zu ermöglichen. Beispielsweise ist aus der DE 44 04 829 A1 eine Antriebseinrichtung zu entnehmen, welche unter anderem ein Überlagerungsgetriebe, zwei Hydromotoren und mehreren Lamellenkupplungen umfasst. Um während der Fahrt die Übersetzung zu ändern, mit welcher der zweite Hydromotor angebunden ist, wird die Ankopplung des zweiten Hydromotors von einer Sonnenradwelle auf ein Hohlrad eines Planetengetriebes umgeschaltet. Dies ermöglicht es, dass die Arbeitsmaschine ohne Unterbrechung der Zugkraft den gesamten Geschwindigkeitsbereich durchfahren kann, weil ein Hydromotor permanent eingebunden bleibt und damit auch während des Schaltvorgangs ein Drehmoment zur Verfügung stellt.

Als nachteilig an einer derartigen Antriebseinrichtung ist jedoch der Umstand anzusehen, dass beide Hydromotoren systembedingt einen eigenen hydraulischen Antrieb erhalten müssen. Es werden also immer mindestens zwei Pumpeinrichtungen für den Fahrantrieb benötigt. Darüber hinaus sind mehrere Lamellenkupplungen, mehrere Drehdurchführungen und eine Pumpeinrichtung erforderlich, um den Druck an den Lamellenkupplungen konstant zu halten. Dies führt zu einem entsprechend hohen Bauraumbedarf der Antriebseinrichtung sowie zu hohen Herstellungskosten.

Aus der EP 1 600 666 A1 ist eine Antriebsanordnung für ein Fahrzeug bekannt, welche wenigstens zwei Hydromotoren, ein von den Hydromotoren antreibbares Getriebe und eine die Hydromotoren mit einer Hydraulikflüssigkeit versorgende Pumpe aufweist. Zur Erzielung einer besonders kompakten Bauform ist vorgesehen, dass die Hydromotoren und das Getriebe eine Baueinheit bilden. Zudem kann vorgesehen sein, dass die Hydromotoren und das Getriebe von der Pumpe mit einem gemeinsamen Kühl- und Schmierflüssigkeitsstrom versorgbar sind.

Die DE 20 2004 009821 U1 offenbart einen hydraulischen Antrieb für Mobilfahrzeuge mit mindestens einem in seinem Hubvolumen verstellbaren Motor, dessen Hubvolumen bis auf Null veränderbar ist.

Bekannt sind außerdem Antriebseinrichtungen, bei welchen einer von zwei Hydromotoren mit einer Lamellenkupplung ein- und ausgekuppelt wird. Die Lamellenkupplung muss jedoch derart ausgelegt sein, dass sie das volle Drehmoment des Hydromotors sicher übertragen kann. Zudem ist bei diesen Konzepten die Lamellenkupplung üblicherweise auf einer Mittelwelle angeordnet, um zu hohe Drehzahlen bei großen Geschwindigkeiten auf dem dann abgekuppelten Antriebszweig zu vermeiden, wodurch das maximal zu übertragende Drehmoment noch größer wird. Auch hier wird daher eine separate Pumpeinrichtung benötigt, um unter allen Betriebsbedingungen einen ausreichenden Druck für die Lamellenkupplung zur Verfügung stellen zu können. Alternativ wird die Kupplung vom ohnehin zur Verfügung stehenden Speisedruck des hydrostatischen Fahrantriebs gespeist. Dieser Speisedruck kann jedoch üblicherweise um den Faktor 3, beispielsweise zwischen etwa 10 bar und etwa 30 bar, schwanken, so dass die Reibleistung an der Lamellenkupplung ebenfalls stark schwankt. Die Lamellenkupplung muss daher im Stande sein, auch bei vergleichsweise geringem Speisedruck das geforderte Drehmoment zu übertragen. Dies erfordert jedoch eine vergleichsweise große Dimensionierung der Lamellenkupplung, wodurch wiederum der Bauraumbedarf und die Herstellungskosten der Antriebseinrichtung signifikant steigen.

Aufgabe der vorliegenden Erfindung ist es, eine Antriebseinrichtung der eingangs genannten Art zu schaffen, welche einen geringen Bauraumbedarf aufweist und kostengünstiger herstellbar ist. Eine weitere Aufgabe der Erfindung ist es, ein entsprechendes Verfahren zum Betreiben einer derartigen Antriebseinrichtung einer selbstfahrenden Arbeitsmaschine zu schaffen.

Die Aufgaben werden erfindungsgemäß durch eine Antriebseinrichtung mit den Merkmalen des Patentanspruchs 1, eine Arbeitsmaschine gemäß Patentanspruch 10 sowie durch ein Verfahren gemäß Patentanspruch 11 zum Betreiben einer Antriebseinrichtung einer selbstfahrenden Arbeitsmaschine gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Antriebseinrichtung als vorteilhafte Ausgestaltungen des Verfahrens und umgekehrt anzusehen sind.

Eine erfindungsgemäße Antriebseinrichtung für eine selbstfahrende Arbeitsmaschine umfasst einen ersten Hydromotor, welcher mit einer Abtriebswelle gekoppelt ist, einen zweiten Hydromotor und eine Kopplungseinrichtung, mittels welcher der zweite Hydromotor in einem ersten Schaltzustand zur Drehmomentenaddition mit der Abtriebswelle koppelbar und in einem zweiten Schaltzustand von der Abtriebswelle entkoppelbar ist. Die Kopplungseinrichtung umfasst dabei wenigstens einen mit dem zweiten Hydromotor gekoppelten Synchronisierungskörper mit einer konusförmigen Reibfläche und ein relativ zum Synchronisierungskörper bewegbares und mit der Abtriebswelle gekoppeltes Gangrad mit einer korrespondierenden Reibfläche, wobei beim Koppeln des zweiten Hydromotors mit der Abtriebswelle ein etwaiger Drehzahlunterschied zwischen dem Synchronisierungskörper und dem Gangrad zumindest reduzierbar und ein Reibschluss zwischen der Reibfläche des Synchronisierungskörpers und der Reibfläche des Gangrads durch relatives Bewegen des Synchronisierungskörpers und des Gangrads zueinander herstellbar ist. Beim Entkoppeln des zweiten Hydromotors von der Abtriebswelle ist der Reibschluss zwischen der Reibfläche des Synchronisierungskörpers und der Reibfläche des Gangrads durch relatives Bewegen des Synchronisierungskörpers und des Gangrads voneinander weg aufhebbar. Die Kopplungseinrichtung ist ausgebildet, den zweiten Hydromotor beim Schalten vom zweiten Schaltzustand in den ersten Schaltzustand vor der Herstellung des Reibschlusses zwischen dem Synchronisierungskörper und dem Gangrad zumindest auf eine vorgegebene Mindestdrehzahl zu beschleunigen. Mit anderen Worten ist es vorgesehen, dass die Kopplungseinrichtung im Unterschied zum Stand der Technik einen Hydromotor-seitigen Synchronisierungskörper und ein mit der Abtriebswelle gekoppeltes Gangrad umfasst, welche beim Koppeln des zweiten Hydromotors mit der Abtriebswelle, das heißt beim Schalten der Kopplungseinrichtung vom zweiten in den ersten Schaltzustand, derart aufeinander bewegt werden, dass ein zumindest mittelbarer Reibschluss zwischen den Reibflächen des Synchronisierungskörpers und des Gangrads hergestellt und das Drehmoment des zweiten Hydromotors hierdurch zum Drehmoment des ersten Hydromotors addiert wird. Grundsätzlich kann dabei natürlich auch vorgesehen sein, dass das Gangrad im Sinne einer kinematischen Umkehr Hydromotor-seitig angeordnet und der Synchronisierungskörper mit der Abtriebswelle gekoppelt ist. Aufgrund des Wegfalls von teuren und aufwändigen Lamellenkupplungen, Planetengetrieben oder dergleichen kann die erfindungsgemäße Antriebseinrichtung somit konstruktiv besonders einfach und bauraumsparend ausgebildet und entsprechend kostengünstig hergestellt werden. Je stärker die Reibfläche des Synchronisierungskörpers dabei auf die Reibfläche des Gangrads bewegt wird, umso höher werden aufgrund der konusförmigen Ausgestaltung die Reibungskräfte zwischen den beiden Reibflächen. Dementsprechend können auch etwaige Drehzahlunterschiede zwischen dem Synchronisierungskörper und dem Gangrad in Abhängigkeit der Reibungskräfte zumindest reduziert bzw. spätestens bei erfolgtem Reibschluss vollständig ausgeglichen werden. Durch größere Betätigungskraft kann somit eine entsprechend schnellere Synchronisation der Drehzahlen erreicht und eine etwaig bestehende Drehzahldifferenz zwischen dem mit dem Synchronisierungskörper gekoppelten zweiten Hydromotor und dem rotierenden Gangrad bei der Herstellung des Reibschlusses ausgeglichen werden. Der zweite Hydromotor ist dabei vorzugsweise mit einem größeren Übersetzungsverhältnis als der erste Hydromotor in den Antriebsstrang eingebunden. Indem die Kopplungseinrichtung ausgebildet ist, den zweiten Hydromotor beim Schalten vom zweiten Schaltzustand in den ersten Schaltzustand zumindest auf eine vorgegebene Mindestdrehzahl zu beschleunigen, kann die beim Einkuppeln des zweiten Hydromotors entstehende Reibleistung vorteilhaft verringert werden. Dies ist insbesondere von Vorteil, wenn der zweite Hydromotor aus dem Stand mit dem bewegten Gangrad gekoppelt werden soll, da durch das kurzzeitige Ausschwenken des zweiten Hydromotors dessen Anfahrdrehmoment nicht bzw. nicht allein durch die Reibpaarung Synchronisierungskörper-Gangrad überwunden werden muss. Umgekehrt kann der Reibschluss beim Entkoppeln des zweiten Hydromotors von der Abtriebswelle, das heißt beim Schalten der Kopplungseinrichtung vom ersten in den zweiten Schaltzustand, aufgehoben werden, wobei etwaige Drehzahlunterschiede zwischen dem Synchronisierungskörper und dem Gangrad aufgrund der Entkopplung unerheblich sind. Wenn der zweite Hydromotor mit einem größeren Übersetzungsverhältnis eingekoppelt ist, kann das Entkoppeln zweckmäßiger Weise beim Überschreiten einer vorgegebenen Geschwindigkeitsgrenze erfolgen. Dabei kann grundsätzlich vorgesehen sein, dass das Umschalten zwischen den Schaltzuständen der Antriebseinrichtung manuell, automatisiert und/oder automatisch vorzunehmen ist.

In einer vorteilhaften Ausgestaltung der Erfindung ist vorgesehen, dass der Synchronisierungskörper und das Gangrad miteinander korrespondierende Verzahnungen umfassen, wobei die Verzahnungen zumindest bei mit der Abtriebswelle gekoppeltem zweitem Hydromotor miteinander im Eingriff sind. Mit anderen Worten ist vorgesehen, dass der Synchronisierungskörper und das Gangrad zumindest bei hergestelltem Reibschluss im ersten Schaltzustand der Kopplungseinrichtung zusätzlich über eine formschlüssige Verbindung miteinander gekoppelt sind. Hierdurch können besonders hohe Drehmomente des zweiten Hydromotors zuverlässig übertragen werden. Die Verzahnung kann beispielsweise als so genannte Vorverzahnung am Synchronisierungskörper und/oder Gangrad ausgebildet sein. Ein weiterer Vorteil besteht darin, dass die Reibflächen des Synchronisierungskörpers und des Gangrads in erster Linie nur zum kurzzeitigen Ausgleich etwaiger Drehzahldifferenzen benötigt werden. Daher können der Synchronisierungskörper und das Gangrad besonders kompakt ausgeführt werden. Somit werden die Vorteile einer herkömmlichen Verzahnung (formschlüssige Verbindung, druckunabhängig) mit denen einer Lamellenkupplung (Ein-/Auskuppeln auch unter Last) vereint.

In einer weiteren vorteilhaften Ausgestaltung der Erfindung ist vorgesehen, dass die Kopplungseinrichtung derart ausgebildet ist, dass ein Ineinandergreifen der Verzahnungen beim Überschreiten einer vorgegebenen Drehzahldifferenz zwischen dem Synchronisierungskörper und dem Gangrad verunmöglicht ist. Mit anderen Worten ist es vorgesehen, dass die Kopplungseinrichtung eine Sperrsynchronisation aufweist, so dass zunächst ein zumindest annähernder Gleichlauf des Synchronisierungskörpers und des Gangrads vorliegen muss, bevor die Verzahnungen miteinander in Eingriff gebracht werden können. Solange dieser zumindest annähernde Gleichlauf nicht erreicht ist, ist der Eingriff der Verzahnungen ineinander gesperrt. Hierdurch werden die beteiligten Bauteile mechanisch geschont und die Lebensdauer der Kopplungseinrichtung vorteilhaft gesteigert.

Weitere Vorteile ergeben sich, wenn die Verzahnungen als Klauenverzahnung, insbesondere mit hinterschnittenen Zähnen, ausgebildet sind. Auf diese Weise ist sichergestellt, dass die Kopplungseinrichtung betriebssicher im ersten Schaltzustand gehalten und die Kopplung zwischen zweitem Hydromotor und Abtriebswelle auch unter hoher Last zuverlässig aufrechterhalten wird. Darüber hinaus stellt eine als Klauenverzahnung ausgebildete Verzahnung im Unterschied zu einer Lamellenkupplung sicher, dass der Synchronisierungskörper und das Gangrad im Fall eines plötzlichen Druckverlusts bzw. bei unerwünschter Aufhebung des Reibschlusses dennoch in ihrer momentanen Position zueinander gehalten werden. Daher kann die Betätigung der Kopplungseinrichtung vorteilhaft und sicher mit Hilfe des ohnehin benötigten Speisedrucks der Hydromotoren erfolgen, wodurch die Antriebseinrichtung besonders kompakt und kostengünstig ausbildbar ist.

In einer weiteren vorteilhaften Ausgestaltung der Erfindung ist vorgesehen, dass die Kopplungseinrichtung einen Schaltzylinder umfasst, mittels welchem der Synchronisierungskörper und das Gangrad relativ zueinander bewegbar sind. Hierdurch ist ein einfaches Schalten der Kopplungseinrichtung zwischen dem ersten und dem zweiten Schaltzustand ermöglicht. Der Schaltzylinder ist dabei ausgelegt, den Synchronisierungskörper relativ zum Gangrad zu bewegen. Der Schaltzylinder kann grundsätzlich mechanisch, elektrisch, pneumatisch, magnetisch und/oder hydraulisch betätigbar sein.

In weiterer Ausgestaltung der Erfindung hat es sich als vorteilhaft gezeigt, wenn der Schaltzylinder ein einen Arbeitsraum aufweisendes Zylinderelement, einen ersten und einen zweiten in dem Arbeitsraum relativ zu diesem verschiebbar aufgenommenen Kolben, durch welche der Arbeitsraum in eine erste, über einen ersten Anschluss des Schaltzylinders mit einem Arbeitsmedium beaufschlagbare Arbeitskammer, eine zweite, über einen zweiten Anschluss des Schaltzylinders mit einem Arbeitsmedium beaufschlagbare Arbeitskammer und eine dritte, zwischen der ersten und der zweiten Arbeitskammer angeordnete Arbeitskammer unterteilt ist, und zumindest ein einerseits an dem ersten Kolben und andererseits an dem zweiten Kolben abstützbares Federelement umfasst, mittels welchem die Kolben gegenseitig kraftbeaufschlagbar sind. Weiterhin ist vorgesehen, dass dem ersten Kolben ein erster Anschlag des Schaltzylinders zugeordnet ist, mittels welchem eine Bewegung des ersten Kolbens in Richtung des zweiten Kolbens begrenzt ist, und dass dem zweiten Kolben ein zweiter Anschlag des Schaltzylinders zugeordnet ist, mittels welchem eine Bewegung des zweiten Kolbens in Richtung des ersten Kolbens begrenzt ist.

Durch die Beaufschlagung des ersten und/oder des zweiten Kolbens mit dem entsprechenden Arbeitsmedium und damit mit dem entsprechenden Druck können die Kolben in dem Arbeitsraum relativ zu diesem verschoben werden, was mit einer Volumenvergrößerung bzw. einer Volumenverkleinerung der ersten bzw. der zweiten Arbeitskammer einhergeht. Der Schaltzylinder umfasst darüber hinaus zumindest ein Federelement, insbesondere eine Druckfeder, welche einerseits an dem ersten Kolben und andererseits an dem zweiten Kolben abstützbar ist. Dabei ist das Federelement beispielsweise in der dritten Arbeitskammer angeordnet. Über das Federelement sind die Kolben somit voneinander beabstandet. Infolge der Abstützbarkeit des Federelements an den Kolben kann das Federelement gespannt werden, indem die Kolben relativ zueinander bewegt, insbesondere aufeinander zu bewegt werden. Mittels des Federelements sind die Kolben gegenseitig kraftbeaufschlagbar.

Wie bereits erwähnt ist dem ersten Kolben ein erster Anschlag des Schaltzylinders zugeordnet, mittels welchem eine Bewegung des ersten Kolbens in Richtung des zweiten Kolbens begrenzt ist. Wird die erste Arbeitskammer mit dem Arbeitsmedium beaufschlagt, was mit der Druckbeaufschlagung des ersten Kolbens einhergeht, so wird der erste Kolben in Richtung des zweiten Kolbens bewegt. Der erste Kolben wird dabei infolge der Druckbeaufschlagung so lange in Richtung des zweiten Kolbens bewegt bzw. kann so lange über einen solchen Bewegungsweg hinweg bewegt werden, bis der erste Kolben in Stützanlage mit dem ihm zugeordneten ersten Anschlag kommt. Ist der erste Kolben in Stützanlage mit dem ersten Anschlag bewegt, so kann erste Kolben nicht mehr weiter in Richtung des zweiten Kolbens bewegt werden, und das auch, wenn der erste Kolben weiterhin über das Arbeitsmedium mit Druck beaufschlagt wird.

Auch dem zweiten Kolben ist ein zweiter Anschlag des Schaltzylinders zugeordnet, mittels welchem eine Bewegung des zweiten Kolbens in Richtung des ersten Kolbens begrenzt ist. Wird beispielsweise die zweite Arbeitskammer mit dem Arbeitsmedium beaufschlagt, wodurch der zweite Kolben mit Druck beaufschlagt wird, so wird dadurch eine Bewegung des zweiten Kolben in Richtung des ersten Kolbens bewirkt. Der zweite Kolben bewegt sich nun so lange bzw. über einen solchen Bewegungsweg hinweg in Richtung des ersten Kolbens, bis der zweite Kolben in Stützanlage mit dem ihm zugeordneten zweiten Anschlag kommt. Ist der zweite Kolben in Stützanlage mit dem zweiten Anschlag bewegt, so kann der zweite Kolben nicht weiter in Richtung des ersten Kolbens bewegt werden, und das auch, wenn der zweite Kolben weiterhin über das Arbeitsmedium mit Druck beaufschlagt wird.

Der Schaltzylinder, über welchen die Kopplungseinrichtung zwischen dem ersten und dem zweiten Schaltzustand schaltbar ist, weist eine besonders geringe Teileanzahl und damit eine besonders geringe Komplexität auf. Dies geht mit einem geringen Bauraumbedarf, einem geringen Gewicht sowie mit geringen Kosten einher.

Darüber hinaus ermöglicht der Schaltzylinder ein besonders sicheres Schalten der Kopplungseinrichtung und damit ein besonders sicheres An- und Entkoppeln des zweiten Hydromotors, da ein plötzliches Beenden der Druckbeaufschlagung des ersten oder des zweiten Kolbens über das entsprechende Arbeitsmedium nicht zu einer unerwünschten Bewegung des ersten Kolbens oder des zweiten Kolbens in dem Arbeitsraum relativ zu dem Zylinderelement führt.

Dadurch ist ein unerwünschtes Schalten der Kopplungseinrichtung und damit ein unerwünschtes Koppeln des erwünschterweise entkoppelten zweiten Hydromotors bzw. ein unerwünschtes Entkoppeln des erwünschterweise gekoppelten zweiten Hydromotors in allen Betriebssituationen zuverlässig vermieden. Dadurch ist auch eine unerwünschte Beschädigung der Kopplungseinrichtung und/oder der Hydromotoren infolge eines unerwünschten Schaltens der Kopplungseinrichtung verhindert.

Zum Bewegen des zweiten Kolbens in Richtung des ersten Kolbens ist vorgesehen, dass eine zweite, auf den zweiten Kolben wirkende Kraft, welche aus der Beaufschlagung des zweiten Kolbens mit dem Arbeitsmedium und damit aus einem zweiten Druck des Arbeitsmediums in der zweiten Arbeitskammer resultiert, größer ist als eine Federkraft, welche der zweiten Kraft entgegenwirkt und welche infolge der Abstützung des Federelements einerseits am zweiten Kolben andererseits am ersten Kolben auf den zweiten Kolben wirkt. Die zweite Kraft und die Federkraft sind dabei größer als eine erste, auf den ersten Kolben wirkende Kraft, welche aus der Druckbeaufschlagung des ersten Kolbens mit dem Arbeitsmedium der ersten Arbeitskammer und somit aus dem Druck des Arbeitsmediums in der ersten Arbeitskammer entgegen der ersten Kraft gegebenenfalls wirkt.

Zum Bewegen des ersten Kolbens in Richtung des zweiten Kolbens sind dazu umgekehrte Kräfteverhältnisse vorgesehen. Dabei ist die erste, infolge der Druckbeaufschlagung des ersten Kolbens mit dem Arbeitsmedium in der ersten Arbeitskammer auf den ersten Kolben wirkende Kraft größer als die Federkraft des Federelements, welche infolge der Abstützung bzw. Abstützbarkeit des Federelements einerseits an dem ersten Kolben und andererseits an dem zweiten Kolben auf den ersten Kolben wirkt und welche der ersten Kraft entgegengerichtet ist. Die erste Kraft und die Federkraft sind dabei größer als die zweite, infolge der Druckbeaufschlagung des zweiten Kolbens auf den zweiten Kolben und entgegen der ersten Kraft gegebenenfalls wirkende Kraft.

Vorteilhafterweise ist beim Bewegen des zweiten Kolbens in Richtung des ersten Kolbens die erste Kraft und damit der Druck in der ersten Arbeitskammer zumindest im Wesentlichen null. In sehr vorteilhafter Weise ist zum Bewegen des ersten Kolbens in Richtung des zweiten Kolbens die zweite Kraft und damit der Druck in der zweiten Arbeitskammer zumindest im Wesentlichen null.

Ist die erste Kammer mit Arbeitsmedium beaufschlagt, was mit einer Druckbeaufschlagung des ersten Kolbens einhergeht, und kommt es zu einem plötzlichen Druckverlust in der ersten Arbeitskammer, sodass der erste Kolben mit einem geringeren Druck oder nicht mehr mit einem Druck beaufschlagt wird, so bewirkt dieser plötzliche Druckverlust keine plötzliche unerwünschte Bewegung des ersten Kolbens innerhalb des Arbeitsraums. Der erste Kolben verbleibt daher auch bei einem plötzlichen Druckverlust in seiner gewünschten Stellung in dem Arbeitsraum. Dadurch wird auch in dieser Stellung ein unerwünschtes Schalten der Kopplungseinrichtung vermieden.

Mit Hilfe dieses Schaltzylinders ist daher auf konstruktiv einfache Art sichergestellt, dass die Kopplungseinrichtung bei Druckverlust immer ihren momentanen Schaltzustand behält. Außerdem erfahren der Synchronisierungskörper und das Gangrad auch bei unterschiedlichen Drücken des Arbeitsmediums stets dasselbe Reibmoment beim Herstellen des Reibschlusses, wodurch die Kopplungseinrichtung vorteilhaft und sicher vom Speisedruck des ohnehin für den Betrieb der Hydromotoren erforderlichen Arbeitsmediums betätigt werden kann.

Weitere Vorteile ergeben sich, indem zwischen dem Synchronisierungskörper und dem Gangrad mindestens ein Synchronisierungselement angeordnet ist, über welches der Reibschluss zwischen dem Synchronisierungskörper und dem Gangrad mittelbar erzeugbar ist. Mit anderen Worten ist es vorgesehen, dass die beim Schalten der Kopplungseinrichtung in den ersten Schaltzustand auftretenden Reibkräfte auf wenigstens ein zusätzliches Synchronisierungselement verteilt werden, über welches der Reibschluss zwischen dem Synchronisierungskörper und dem Gangrad mittelbar hergestellt wird. Auf diese Weise umfasst die Kopplungseinrichtung mindestens zwei zusätzliche Reibflächen des Synchronisierungselements, wodurch größere Drehmomente aufnehmbar sind, größere Drehzahldifferenzen zwischen dem Synchronisierungskörper und dem Gangrad tolerierbar sind und die Lebensdauer der Kopplungseinrichtung vorteilhaft verlängert wird. Vorzugsweise sind die Reibflächen des Synchronisierungselements ebenfalls konusförmig bzw. korrespondierend mit den zugeordneten Reibflächen des Synchronisierungskörpers und/oder des Gangrads ausgebildet. Grundsätzlich kann vorgesehen sein, dass zwei, drei, vier oder weitere Synchronisierungselemente zwischen dem Synchronisierungskörper und dem Gangrad angeordnet sind, wodurch die Lebensdauer der beteiligten Reibpaarungen zusätzlich erhöht werden kann. Weiterhin kann vorgesehen sein, dass mindestens ein Synchronisierungselement drehfest und/oder um höchstens ±25° verdrehbar am Synchronisierungskörper und/oder am Gangrad angeordnet ist.

Zusätzliche Bauraum- und Kosteneinsparungen sind in weiterer Ausgestaltung dadurch ermöglicht, dass die Antriebseinrichtung lediglich eine Pumpeinrichtung umfasst, mittels welcher beide Hydraulikmotoren und/oder die Kopplungseinrichtung mit Arbeitsmedium zu versorgen sind. Dabei hat es sich als besonders vorteilhaft gezeigt, wenn die Kopplungseinrichtung den vorstehend beschriebenen Schaltzylinder umfasst und dieser durch entsprechende Druckbeaufschlagung mit dem Arbeitsmedium zum Schalten der Kopplungseinrichtung zwischen der ersten und der zweiten Schaltstellung verwendbar ist. Zusätzliche Bauraum- und Kosteneinsparungen sind in weiterer Ausgestaltung dadurch ermöglicht, dass der erste und der zweite Hydromotor hydraulisch parallel geschaltet sind. Darüber hinaus können der erste und der zweite Hydromotor auf diese Weise besonders einfach mit lediglich einer Pumpeinrichtung mit Arbeitsmedium versorgt werden.

In weiterer Ausgestaltung der Erfindung hat es sich als vorteilhaft gezeigt, wenn der Synchronisierungskörper auf seiner dem Gangrad abgewandten Seite eine weitere Reibfläche aufweist, welche in Anlage mit einer korrespondierenden Reibfläche eines bezüglich der Antriebseinrichtung drehfesten Gehäuses bringbar ist. Hierdurch kann der zweite Hydromotor bei in den zweiten Schaltzustand geschalteter Kopplungseinrichtung abgebremst und/oder über einen Reibschluss am Gehäuse festgelegt werden. Dabei kann weiterhin vorgesehen sein, dass der Synchronisierungskörper und das Gehäuse miteinander korrespondierende Verzahnungen aufweisen, mittels welchen zusätzlich eine formschlüssige Verbindung zwischen dem Synchronisierungskörper und dem Gehäuse herstellbar ist. Auch diese Verzahnung kann in weiterer Ausgestaltung als Klauenverzahnung ausgebildet sein. Gemäß der Erfindung hat es sich als vorteilhaft gezeigt, wenn die Kopplungseinrichtung ausgebildet ist, den zweiten Hydromotor beim Schalten vom zweiten Schaltzustand in den ersten Schaltzustand vor der Herstellung des Reibschlusses zwischen dem Synchronisierungskörper und dem Gangrad zumindest auf die vorgegebene Mindestdrehzahl zu beschleunigen. Hierdurch kann die beim Einkuppeln des zweiten Hydromotors entstehende Reibleistung vorteilhaft verringert werden. Dies ist insbesondere von Vorteil, wenn der zweite Hydromotor aus dem Stand mit dem bewegten Gangrad gekoppelt werden soll, da durch das kurzzeitige Ausschwenken des zweiten Hydromotors dessen Anfahrdrehmoment nicht bzw. nicht allein durch die Reibpaarung Synchronisierungskörper-Gangrad überwunden werden muss.

Ein weiterer Aspekt der Erfindung betrifft eine Arbeitsmaschine, insbesondere eine landgebundene, selbstfahrende Arbeitsmaschine, mit einer Antriebseinrichtung nach einem der vorhergehenden Ausführungsbeispiele. Die sich hieraus ergebenden Merkmale und deren Vorteile sind den entsprechenden Beschreibungen zu entnehmen und gelten entsprechend für die Arbeitsmaschine.

Ein weiterer Aspekt der Erfindung betrifft ein Verfahren zum Betreiben einer Antriebseinrichtung einer selbstfahrenden Arbeitsmaschine, wobei die Antriebseinrichtung einen ersten Hydromotor, welcher zum Antreiben der Arbeitsmaschine mit einer mit einer Achse der Arbeitsmaschine gekoppelten Abtriebswelle gekoppelt ist, einen zweiten Hydromotor und eine Kopplungseinrichtung, mittels welcher der zweite Hydromotor in einem ersten Schaltzustand zur Drehmomentenaddition mit der Abtriebswelle gekoppelt und in einem zweiten Schaltzustand von der Abtriebswelle entkoppelt wird, umfasst. Die Kopplungseinrichtung umfasst ihrerseits wenigstens einen mit dem zweiten Hydromotor gekoppelten Synchronisierungskörper mit einer konusförmigen Reibfläche und ein relativ zum Synchronisierungskörper bewegbares und mit der Abtriebswelle gekoppeltes Gangrad mit einer korrespondierenden Reibfläche. Im Rahmen des erfindungsgemäßen Verfahrens ist es dabei vorgesehen, dass beim Schalten der Kopplungseinrichtung vom zweiten in den ersten Schaltzustand der Synchronisierungskörper und das Gangrad relativ zueinander bewegt, ein etwaiger Drehzahlunterschied zwischen dem Synchronisierungskörper und dem Gangrad zumindest reduziert und ein Reibschluss zwischen der Reibfläche des Synchronisierungskörpers und der Reibfläche des Gangrads hergestellt wird. Weiterhin ist vorgesehen, dass beim Schalten der Kopplungseinrichtung vom ersten in den zweiten Schaltzustand der Synchronisierungskörper und das Gangrad relativ voneinander wegbewegt und der Reibschluss zwischen der Reibfläche des Synchronisierungskörpers und der Reibfläche des Gangrads aufgehoben wird. Erfindungsgemäß ist vorgesehen, dass die Kopplungseinrichtung den zweiten Hydromotor beim Schalten vom zweiten Schaltzustand in den ersten Schaltzustand vor der Herstellung des Reibschlusses zwischen dem Synchronisierungskörper und dem Gangrad, zumindest auf eine vorgegebene Mindestdrehzahl beschleunigt. Hierdurch wird die beim Einkuppeln des zweiten Hydromotors entstehende Reibleistung vorteilhaft verringert. Dies ist insbesondere von Vorteil, wenn der zweite Hydromotor aus dem Stand mit dem bewegten Gangrad gekoppelt werden soll, da durch das kurzzeitige Ausschwenken des zweiten Hydromotors dessen Anfahrdrehmoment nicht bzw. nicht allein durch die Reibpaarung Synchronisierungskörper-Gangrad überwunden werden muss. Das erfindungsgemäße Verfahren ermöglicht es, die Arbeitsmaschine ohne Unterbrechung der Zugkraft über ihren gesamten Geschwindigkeitsbereich zu durchfahren, weil der erste Hydromotor permanent eingebunden bleibt und auch während des Schaltvorgangs ein entsprechendes Drehmoment zur Verfügung stellt. Der zweite Hydromotor wird bei Bedarf und vorzugsweise mit größerer Übersetzung als der erste Hydromotor eingekoppelt und stellt damit sein zusätzliches Drehmoment zur Verfügung. Ab einer gewissen Geschwindigkeit der Arbeitsmaschine wird der zweite Hydromotor in der oben beschriebenen Weise ausgekoppelt, um ihn vor unzulässig hohen Drehzahlen zu schützen. Die Antriebseinrichtung kann dabei konstruktiv besonders einfach und bauraumsparend ausgebildet und entsprechend kostengünstig hergestellt werden. Je stärker die Reibfläche des Synchronisierungskörpers auf die Reibfläche des Gangrads bewegt wird, umso höher werden aufgrund der konusförmigen Ausgestaltung die Reibungskräfte zwischen den beiden Reibflächen. Dementsprechend werden auch etwaige Drehzahlunterschiede zwischen dem Synchronisierungskörper und dem Gangrad in Abhängigkeit der Reibungskräfte zumindest reduziert bzw. spätestens bei erfolgtem Reibschluss vollständig ausgeglichen. Durch größere Betätigungskraft wird eine entsprechend schnellere Synchronisation der Drehzahlen erreicht und eine etwaig bestehende Drehzahldifferenz zwischen dem mit dem Synchronisierungskörper gekoppelten zweiten Hydromotor und dem rotierenden Gangrad bei der Herstellung des Reibschlusses ausgeglichen. Weitere sich ergebende Vorteile sind den vorhergehenden Beschreibungen zu entnehmen, wobei vorteilhafte Ausgestaltungen der Antriebseinrichtung als vorteilhafte Ausgestaltungen des Verfahrens und umgekehrt anzusehen sind.

In einer vorteilhaften Ausgestaltung der Erfindung ist vorgesehen, dass beim Schalten der Kopplungseinrichtung vom zweiten in den ersten Schaltzustand miteinander korrespondierende Verzahnungen des Synchronisierungskörpers und des Gangrads miteinander im Eingriff gebracht werden und/oder dass beim Schalten der Kopplungseinrichtung vom ersten in den zweiten Schaltzustand die miteinander korrespondierenden Verzahnungen des Synchronisierungskörpers und des Gangrads außer Eingriff gebracht werden. Mit anderen Worten ist vorgesehen, dass der Synchronisierungskörper und das Gangrad zumindest bei hergestelltem Reibschluss im ersten Schaltzustand der Kopplungseinrichtung zusätzlich über eine formschlüssige Verbindung miteinander gekoppelt werden. Hierdurch können besonders hohe Drehmomente des zweiten Hydromotors zuverlässig übertragen werden. Als Verzahnung kann beispielsweise eine so genannte Vorverzahnung am Synchronisierungskörper und/oder Gangrad verwendet werden. Ein weiterer Vorteil besteht darin, dass die Reibflächen des Synchronisierungskörpers und des Gangrads in erster Linie nur zum kurzzeitigen Ausgleich etwaiger Drehzahldifferenzen benötigt werden. Daher können der Synchronisierungskörper und das Gangrad besonders kompakt ausgeführt werden. Somit werden die Vorteile einer herkömmlichen Verzahnung (formschlüssige Verbindung, druckunabhängig) mit denen einer Lamellenkupplung (Ein-/Auskuppeln auch unter Last) vereint.

Weitere Vorteile ergeben sich, wenn die Kopplungseinrichtung einen Schaltzylinder umfasst, mittels welchem der Synchronisierungskörper und das Gangrad relativ zueinander bewegt werden. Hierdurch ist ein einfaches Schalten der Kopplungseinrichtung zwischen dem ersten und dem zweiten Schaltzustand ermöglicht. Mit Hilfe des Schaltzylinders werden dabei der Synchronisierungskörper und das Gangrad relativ zueinander bewegt. Der Schaltzylinder kann grundsätzlich mechanisch, elektrisch, pneumatisch, magnetisch und/oder hydraulisch betätigt werden. Gemäß der Erfindung ist vorgesehen, dass die Kopplungseinrichtung den zweiten Hydromotor beim Schalten vom zweiten Schaltzustand in den ersten Schaltzustand vor der Herstellung des Reibschlusses zwischen dem Synchronisierungskörper und dem Gangrad zumindest auf die vorgegebene Mindestdrehzahl beschleunigt. Hierdurch wird die beim Einkuppeln des zweiten Hydromotors entstehende Reibleistung vorteilhaft verringert. Dies ist insbesondere von Vorteil, wenn der zweite Hydromotor aus dem Stand mit dem bewegten Gangrad gekoppelt werden soll, da durch das kurzzeitige Ausschwenken des zweiten Hydromotors dessen Anfahrdrehmoment nicht bzw. nicht allein durch die Reibpaarung Synchronisierungskörper-Gangrad überwunden werden muss.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung einer erfindungsgemäßen Antriebseinrichtung;
- Fig. 2: eine schematische Längsschnittansicht eines in Fig. 1 gezeigten Schaltzylinders der Antriebseinrichtung; und
- Fig. 3: eine schematische Längsschnittansicht einer weiteren Ausführungsform des Schaltzylinders.

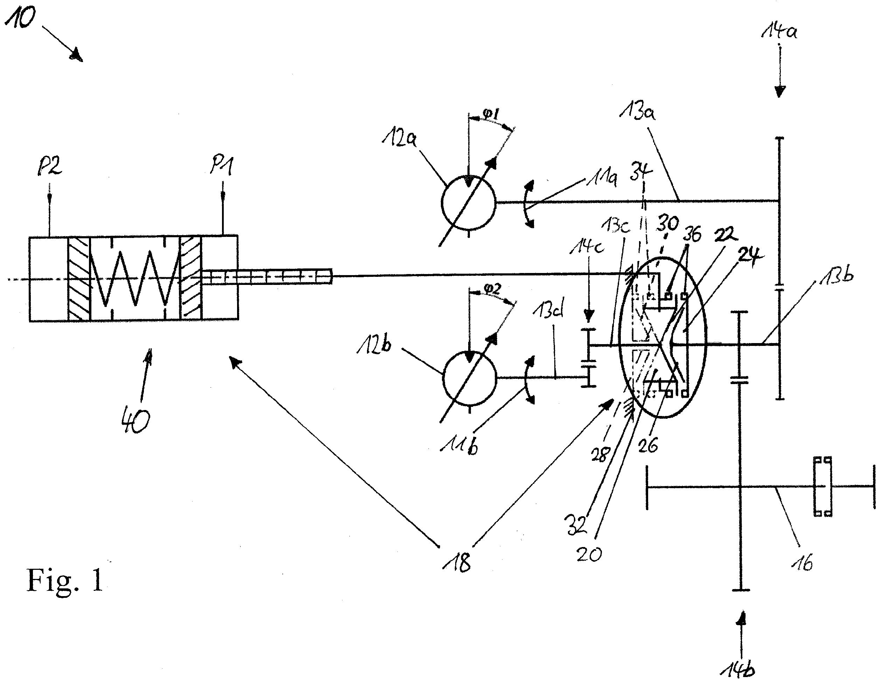

Fig. 1 zeigt eine Prinzipdarstellung einer erfindungsgemäßen Antriebseinrichtung 10 für eine landgebundene, selbstfahrende Arbeitsmaschine (nicht gezeigt). Die Antriebseinrichtung 10 umfasst einen ersten Hydromotor 12a, welcher mittels einer Hydraulikflüssigkeit antreibbar ist und über eine Welle 13a, eine Zahnradpaarung 14a, eine Welle 13b und eine Zahnradpaarung 14b mit einer Abtriebswelle 16 gekoppelt ist. Weiterhin umfasst die Antriebseinrichtung 10 einen zweiten, mittels einer Hydraulikflüssigkeit antreibbaren Hydromotor 12b und eine Kopplungseinrichtung 18, mittels welcher der zweite Hydromotor 12b in einem ersten Schaltzustand zur Drehmomentenaddition mit der Abtriebswelle 16 koppelbar und in einem zweiten Schaltzustand von der Abtriebswelle 16 entkoppelbar ist. Der Hydromotor 12a weist einen Arbeitsbereich auf, der es nicht zulässt, das gesamte Fahrspektrum der Arbeitsmaschine einer hohen Zugkraft bei kleinen Fahrgeschwindigkeiten bis hin zu sehr hohen Fahrgeschwindigkeiten abzudecken. Daher ist der erste Hydromotor 12a für schnelle Geschwindigkeiten und geringere Zugkräfte vorgesehen und mit einer geringeren Übersetzung permanent mit der Abtriebswelle 16 gekoppelt. Der zweite Hydromotor 12b kann mit größerer Übersetzung für langsame Geschwindigkeiten und große Zugkräfte zugeschaltet werden. Über die Abtriebswelle 16 erfolgt in an sich bekannter Weise mittelbar oder unmittelbar der Antrieb der Arbeitsmaschine. Mit Hilfe der im Folgenden näher erläuterten Kopplungseinrichtung 18 kann die Arbeitsmaschine ohne Unterbrechung der Zugkraft den gesamten Geschwindigkeitsbereich durchfahren, wobei der erste Hydromotor 12a auch während dem Schalten zwischen dem ersten und dem zweiten Schaltzustand der Kopplungseinrichtung 18 ein entsprechendes Drehmoment zur Verfügung stellt.

Zum Antreiben des ersten Hydromotor 12a und des zweiten Hydromotors 12b sind beide Hydromotoren 12a, 12b mittels lediglich einer gemeinsamen Pumpeinrichtung (nicht abgebildet) der Antriebseinrichtung 10 mit der Hydraulikflüssigkeit zu versorgen. Dadurch weist die Antriebseinrichtung 10 eine geringe Teileanzahl, ein geringes Gewicht und einen geringen Bauraumbedarf auf und kann dementsprechend kostengünstig gefertigt werden. Wie an den beiden Richtungspfeilen 11a, 11b erkennbar ist, ist die Drehrichtung beider Hydromotoren 12a, 12b umkehrbar, so dass die Arbeitsmaschine beispielsweise vorwärts und rückwärts bewegt werden kann.

Die Kopplungseinrichtung 18 weist ihrerseits wenigstens einen mit dem zweiten Hydromotor 12b gekoppelten und vorliegend als Synchronring ausgebildeten Synchronisierungskörper 20 mit einer konusförmigen Reibfläche 22 sowie ein relativ zum Synchronisierungskörper 20 bewegbares und mit der Abtriebswelle 16 gekoppeltes Gangrad 24 mit einer korrespondierenden Reibfläche 26 auf. Das Gangrad 24 ist vorliegend drehfest mit der Welle 13b verbunden, während der Synchronisierungskörper 20 über eine Welle 13c, eine Zahnradpaarung 14c und eine Welle 13d mit dem zweiten Hydromotor 12b gekoppelt ist.

Mit strichlierten Linien ist eine alternative Ausführungsform der Kopplungseinrichtung 18 angedeutet, gemäß welcher der Synchronisierungskörper 20 auf seiner dem Gangrad 24 abgewandten Seite eine weitere Reibfläche 28 aufweist, welche in Anlage mit einer korrespondierenden Reibfläche 30 eines drehfest an der Arbeitsmaschine gehaltenen Gehäuses 32 bringbar ist. Hierdurch kann der zweite Hydromotor 12b bei in den zweiten Schaltzustand geschalteter Kopplungseinrichtung 18 abgebremst bzw. über einen Reibschluss am Gehäuse 32 festgelegt werden. Dabei kann weiterhin vorgesehen sein, dass der Synchronisierungskörper 20 und das Gehäuse 32 miteinander korrespondierende Verzahnungen 34 aufweisen, mittels welchen eine formschlüssige Verbindung zwischen dem Synchronisierungskörper 20 und dem Gehäuse 32 herstellbar ist. Die Verzahnungen 34 können in weiterer Ausgestaltung als Klauenverzahnung ausgebildet sein.

Zum Koppeln des zweiten Hydromotors 12b mit der Abtriebswelle 16, das heißt beim Schalten der Kopplungseinrichtung 18 in den ersten Schaltzustand, wird der Synchronisierungskörper 20 auf das axial feststehende Gangrad 24 bewegt, wodurch ein Reibschluss zwischen der Reibfläche 22 des Synchronisierungskörpers 20 und der Reibfläche 26 des Gangrads 24 hergestellt wird. Gleichzeitig wird ein etwaiger Drehzahlunterschied zwischen dem Synchronisierungskörper 20 bzw. der Welle 13c und dem Gangrad 24 bzw. der Welle 13b reduziert bzw. bei Herstellung des Reibschlusses vollständig ausgeglichen. Um die entstehende Reibleistung möglichst gering zu halten, wird die mechanische Synchronisierung durch eine gleichzeitige oder zeitlich vorgelagerte hydraulische Synchronisierung unterstützt. Hierzu wird der zweite Hydromotor 12b bei oder vor dem Inkontaktbringen der Reibflächen 22, 26 kurzzeitig ausgeschwenkt (ϕ2), so dass er eine gewisse Mindestdrehzahl erreicht. Anschließend kann der zweite Hydromotor 12b mit geringerer Reibleistung in der vorstehend beschriebenen Weise eingekuppelt werden und sein zusätzliches Drehmoment zur Verfügung stellen. Hierdurch werden die Reibflächen 22, 26 geschont, da sie lediglich zum kurzzeitigen Ausgleich geringer Drehzahldifferenz beim Einkuppeln benötigt werden. Die Reibflächen 22, 26 bzw. der Synchronisierungskörper 20 und das Gangrad 24 können daher sehr klein ausgeführt werden, wodurch die Kopplungseinrichtung 18 entsprechend kompakt und kostengünstig darstellbar ist.

Zum Entkoppeln des zweiten Hydromotors 12b von der Abtriebswelle 16, das heißt beim Schalten der Kopplungseinrichtung 18 in den zweiten Schaltzustand, wird der Synchronisierungskörper 20 vom Gangrad 24 wegbewegt, wodurch der Reibschluss zwischen der Reibfläche 22 des Synchronisierungskörpers 20 und der Reibfläche 26 des Gangrads 24 wieder aufgehoben wird. In Abhängigkeit der Ausgestaltung der Kopplungseinrichtung 18 kann der zweite Hydromotor 12b anschließend gegebenenfalls in der vorstehend beschriebenen Weise am Gehäuse 32 festgelegt werden.

Der Synchronisierungskörper 20 und das Gangrad 24 umfassen miteinander korrespondierende Verzahnungen 36, wobei die Verzahnungen 36 bei mit der Abtriebswelle 16 gekoppeltem zweiten Hydromotor 12b, das heißt im ersten Schaltzustand der Kopplungseinrichtung 18, miteinander im Eingriff sind und zusätzlich zur reibschlüssigen auch eine formschlüssige Verbindung herstellen. Die Verzahnungen 36 sind dabei vorliegend als Klauenverzahnung mit hinterschnittenen Zähnen ausgebildet. Im ersten Schaltzustand erfolgt die Kraftübertragung somit formschlüssig mit Hilfe der Verzahnungen 36, welche die Kopplungseinrichtung 18 auch unter Last oder bei einem Druckverlust im hydraulischen System stets im geschlossenen ersten Schaltzustand halten.

Im gezeigten Ausführungsbeispiel umfassen die Zahnräder der Zahnradpaarung 14a 37 Zähne (Zahnrad auf Welle 13a) und 31 Zähne (Zahnrad auf Welle 13b), wodurch sich ein Übersetzungsverhältnis i=0,838 ergibt. Die Zahnräder der Zahnradpaarung 14b umfassen 21 Zähne (Zahnrad auf Welle 13b) bzw. 49 Zähne (Zahnrad auf Abtriebswelle 16), wodurch sich ein Übersetzungsverhältnis i=2,333 ergibt. Die Zahnräder der Zahnradpaarung 14c umfassen schließlich 19 Zähne (Zahnrad auf Welle 13d) bzw. 52 Zähne (Zahnrad auf Welle 13c), wodurch sich ein Übersetzungsverhältnis i=2,737 ergibt. Das 37 Zähne umfassende Zahnrad der Zahnradpaarung 14a steht damit zum 19 Zähne umfassenden Zahnrad der Zahnradpaarung 14c in einem Übersetzungsverhältnis i=3,266. Das 37 Zähne umfassende Zahnrad der Zahnradpaarung 14a steht zum 49 Zähne umfassenden Zahnrad der Zahnradpaarung 14b in einem Übersetzungsverhältnis i=1,955. Das 19 Zähne umfassende Zahnrad der Zahnradpaarung 14c steht schließlich zum 49 Zähne umfassenden Zahnrad der Zahnradpaarung 14b in einem Übersetzungsverhältnis i=6,386. Es ist jedoch zu betonen, dass es sich hierbei lediglich um nicht einschränkende Beispiele für mögliche Übersetzungsverhältnisse handelt und dass auch abweichende Übersetzungen vorgesehen sein können.

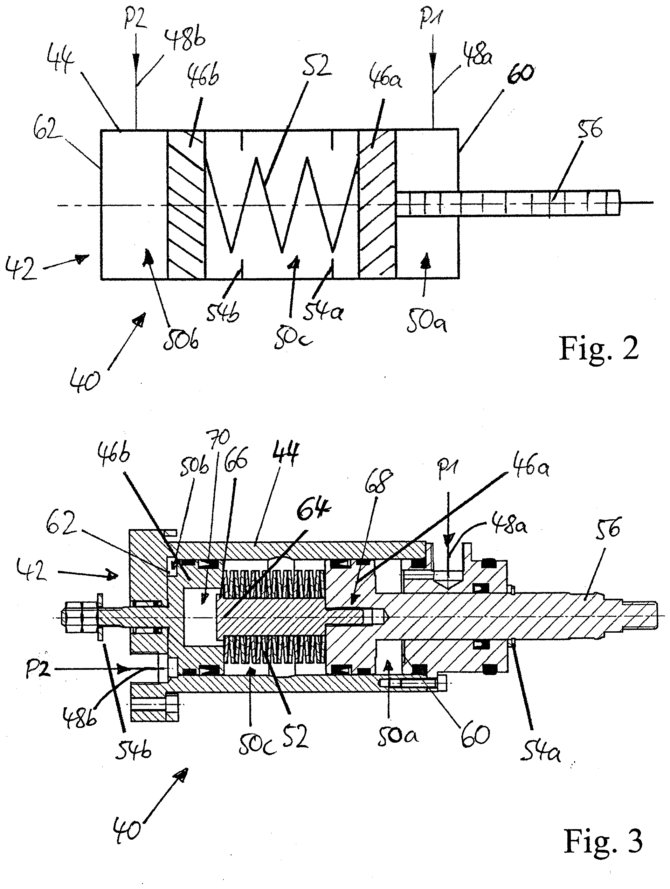

Um den Synchronisierungskörper 20 und das Gangrad 24 relativ zueinander zu bewegen, umfasst die Kopplungseinrichtung 18 einen Schaltzylinder 40, welcher im Folgenden anhand von Fig. 2 näher erläutert werden wird, welche eine schematische Längsschnittansicht des Schaltzylinders 40 zeigt. Der Schaltzylinder 40 umfasst ein einen Arbeitsraum 42 aufweisendes Zylinderelement 44 sowie einen ersten Kolben 46a und einen zweiten Kolben 46b, welche in dem Arbeitsraum 42 relativ zu diesem verschiebbar aufgenommenen sind. Durch die Kolben 46a, 46b ist der Arbeitsraum 42 in eine erste, über einen ersten Anschluss 48a des Schaltzylinders 40 mit einem Arbeitsmedium beaufschlagbare Arbeitskammer 50a, eine zweite, über einen zweiten Anschluss 48b des Schaltzylinders 40 mit einem Arbeitsmedium beaufschlagbare Arbeitskammer 50b und eine dritte, zwischen der ersten und der zweiten Arbeitskammer 50a, 50b angeordnete Arbeitskammer 50c unterteilt. Weiterhin umfasst der Schaltzylinder 40 ein einerseits an dem ersten Kolben 46a und andererseits an dem zweiten Kolben 46b abstützbares, als Druckfeder ausgebildetes Federelement 52, mittels welchem die Kolben 46a, 46b gegenseitig kraftbeaufschlagbar sind.

Dem ersten Kolben 46a ist weiterhin ein erster Anschlag 54a des Schaltzylinders 40 zugeordnet, mittels welchem eine Bewegung des ersten Kolbens 46a in Richtung des zweiten Kolbens 46b begrenzt ist. Dem zweiten Kolben 46b ist ein zweiter Anschlag 54b des Schaltzylinders 40 zugeordnet, mittels welchem eine Bewegung des zweiten Kolbens 46b in Richtung des ersten Kolbens 46a begrenzt ist. Der erste Kolben 46a ist mit einer durch das Gehäuse des Schaltzylinders 40 geführten Schubstange 56 verbunden, welche mit dem ersten Kolben 46a mitbewegbar ist. Ferner ist die Schubstange 56 mit dem Synchronisierungskörper 20 der Kopplungseinrichtung 18 gekoppelt, sodass durch axiales Bewegen der Schubstange 56 der Synchronisierungskörper 20 relativ zum Gangrad 24 in axialer Richtung der Wellen 13c bzw. 13d mitbewegt werden kann.

Zum Schließen der Kopplungseinrichtung 18, d. h. zum Schalten in den ersten Schaltzustand, wird die zweite Arbeitskammer 50b mit Hydraulikflüssigkeit beaufschlagt, sodass in der zweiten Arbeitskammer 50b ein Druck P2 herrscht, welcher auf den zweiten Kolben 46b wirkt. Aus diesem Druck resultiert in Abhängigkeit von einer Fläche des zweiten Kolbens 46b, auf welche der Druck P2 wirkt, eine zu dem zweiten Kolben 46b korrespondierende zweite Kraft. Diese zweite Kraft ist dabei höher als eine gegebenenfalls durch das Federelement 52 infolge ihrer Abstützung an dem ersten Kolben 46a auf den zweiten Kolben 46b wirkende Federkraft sowie größer als eine zu dem ersten Kolben 46a korrespondierende erste Kraft, welche gegebenenfalls infolge der Beaufschlagung der ersten Arbeitskammer 50a mit Hydraulikflüssigkeit mit einem Druck P1 entgegen der zweiten Kraft wirkt. Durch die zweite Kraft wird der zweite Kolben 46b in Richtung des ersten Kolbens 46a bewegt Der zweite Kolben 46b bewegt sich so lange, bis er in Stützanlage mit dem zweiten Anschlag 54b kommt. Dadurch wird das Federelement 52 gespannt, sodass der erste Kolben 46a eine definierte und von dem Druck P2 unabhängige Kraft erfährt, welche von dem gespannten Federelement 52 ausgeht. Mit dieser Kraft wird der erste Kolben 46a von dem zweiten Kolben 46b wegbewegt, wodurch die Reibfläche 22 auf die Reibfläche 26 zu bewegt wird.

Wenn die Drehzahlen der Wellen 13c und 13b synchronisiert sind, bewegt sich der erste Kolben 46a weiter bis zu seiner Endstellung im Arbeitsraum 42, beispielsweise bis er an einer den Arbeitsraum 42 und die erste Arbeitskammer 50a begrenzenden Stirnwand 60 des Zylinderelements 44 abgestützt ist. Bei einem plötzlichen Druckabfall des Drucks P2 verbleibt der erste Kolben 46a in seiner Relativstellung zu dem Arbeitsraum 42, während der zweite Kolben 46b durch die Federkraft des Federelements 52 so weit bewegt wird, bis das Federelement 52 entspannt ist. Die Kopplungseinrichtung 18 bleibt jedoch geschlossen. Dies wird durch die Klauenverzahnung unterstützt, durch welche die Kopplungseinrichtung 18 auch bei Druckverlust zumindest im Wesentlichen stets ihren momentanen Schaltzustand hält.

Ein weiterer Vorteil des Schaltzylinders 40 ist, dass auch bei unterschiedlichen Drücken P1 und P2 zumindest im Wesentlichen stets dasselbe Reibmoment beim Schließen (Einkuppeln) der Kopplungseinrichtung 18 vorliegt und auf die Kopplungseinrichtung 18 wirkt. Daher kann die Kopplungseinrichtung 18 vorteilhaft und sicher von einem so genannten Speisetrog der Antriebseinrichtung 10 geschlossen werden. Da zumindest im Wesentlichen beim Schalten der Kopplungseinrichtung 18 stets die gleiche konstante Kraft an der Schubstange 56 auch bei unterschiedlichen Drücken P1 und P2 vorliegt, ist ein zumindest im Wesentlichen ein stets gleiches Reib- und Synchronisierungsverhalten der Kopplungseinrichtung 18 gegeben. Dadurch können die Hydromotoren 12a, 12b sowie beide Arbeitskammern 50a, 50b mit einer gemeinsamen Pumpeinrichtung mit Hydraulikflüssigkeit versorgt werden, wobei ein Schwanken des Speisedrucks der Hydraulikflüssigkeit nicht zu einer Schwankung des Reibmoments und damit der Reibleistung der Kopplungseinrichtung 18 führt. Dies ist insbesondere durch die Federbelastung des ersten Kolbens 46a realisiert, wobei es durch den Schaltzylinder 40 gleichzeitig ermöglicht ist, dass sich die Relativstellung des ersten Kolbens 46a zu dem Arbeitsraum 42 bei einem unerwünschten und plötzlichen Druckverlust zumindest im Wesentlichen nicht ändert.

Zum Öffnen der Kopplungseinrichtung 18, d. h. zum Schalten in den zweiten Schaltzustand, wird die erste Arbeitskammer 50a mit Hydraulikflüssigkeit beaufschlagt, so dass in der ersten Arbeitskammer 50a der Druck P1 herrscht. Dieser Druck P1 wirkt auf den ersten Kolben 46a. In Abhängigkeit von einer Fläche des ersten Kolbens 46a, auf die der Druck P1 wirkt, resultiert aus dem Druck P1 die erste Kraft, welche in Richtung des zweiten Kolbens 46b wirkt. Dabei ist die erste Kraft größer als eine durch das Federelement 52 gegebenenfalls auf den ersten Kolben 46a entgegen der ersten Kraft wirkende Kraft und größer als die zweite Kraft, wobei die durch das Federelement 52 wirkende Kraft größer ist als die zweite Kraft. Durch das Bewegen des ersten Kolbens 46a in Richtung des zweiten Kolbens 46b wird das Federelement 52 wiederum gespannt, sodass durch das Federelement 52 eine Federkraft auf den zweiten Kolben 46b wirkt. Durch diese Federkraft wird der zweite Kolben 46b in Richtung einer weiteren Stirnwand 62 des Zylinderelements 44 bewegt, durch welche der Arbeitsraum 42 und die zweite Arbeitskammer 50b teilweise begrenzt sind. Die axiale Erstreckung bzw. die Länge des Federelements 52 sowie des Zylinderelements 44 und damit des Arbeitsraums 42 sind beispielsweise derart bemessen, dass bei geöffneter Kopplungseinrichtung 18 keine Federkraft mehr auf den ersten Kolben 46a wirkt. Somit führt ein plötzlicher Druckverlust des Drucks P1 ebenfalls nicht zu einer unerwünschten Bewegung des ersten Kolbens 46a relativ zu dem Arbeitsraum 42. Ein unerwünschtes Schalten der Kopplungseinrichtung 18 wird somit verunmöglicht. Mit anderen Worten haben somit weder der Druckverlust des Drucks P2 noch der Druckverlust des Drucks P1 einen Einfluss auf den Schaltzustand der Kopplungseinrichtung 18 und damit auf den Betriebszustand der Arbeitsmaschine. Hierdurch unterscheidet sich der Schaltzylinder 40 wesentlich von herkömmlichen federbelasteten Kolben, da diese bei einem Druckabfall plötzlich ihre Position ändern können, was zu unerwünschten Betriebszuständen, beispielsweise zum unkontrollierten Hochdrehen des zweiten Hydromotors 12b führen kann.

Fig. 3 zeigt eine schematische Längsschnittansicht einer weiteren Ausführungsform des Schaltzylinders 40. Im Unterschied zum vorhergehenden Ausführungsbeispiel wird das Federelement 52 am ersten Kolben 46a derart vorgespannt, dass es sich nur in seinem Arbeitsbereich bewegen kann. Hierzu umfasst der Schaltzylinder 40 gemäß Fig. 3 eine Kolbenstange 64 mit einem Bund 66. Der erste Kolben 46a weist eine beispielsweise als Bohrung ausgeführte Aufnahme 68 auf, in welcher ein dem Bund 66 gegenüberliegender Endbereich der Kolbenstange 64 aufgenommen, beispielsweise eingeschraubt, eingepresst oder beweglich gelagert, ist.

Der nicht benötigte Längenbereich zwischen vollständig entspanntem Federelement 52 und derjenigen Länge, die zum vollständigen Einkuppeln der Kopplungseinrichtung 18 benötigt wird, wird an bzw. auf der Kolbenstange 64 und dem ersten Kolben 46a vorgespannt, wobei sich das Federelement 52 im vorgespannten Zustand einerseits am Bund 66 und andererseits am Kolben 46a abstützt. Im Unterschied zum ersten Ausführungsbeispiel kann der Schaltzylinder 40 hierdurch kürzer ausgeführt werden, wodurch sich weitere Bauraumeinsparungen ergeben. Ein weiterer Unterschied zum ersten Ausführungsbeispiel besteht darin, dass die Anschläge 54a, 54b der Kolben 46a, 46b außerhalb des Zylinderelements 44 angeordnet sind, wodurch eine nachträgliche Einstellbarkeit der Federkraft des Federelements 52 ermöglicht ist.

Bei in den ersten Schaltzustand geschalteter Kopplungseinrichtung 18, das heißt bei eingekoppeltem zweiten Hydromotor 12b, liegt der erste Kolben 46a an der Stirnwand 60 an, wobei über den zweiten Kolben 46b und das vorgespannte Federelement 52 noch eine Rest-Federkraft wirkt. Der zweite Kolben 46b liegt am zweiten Anschlag 54b an. Im Fall eines Druckverlusts des Drucks P2 in der zweiten Arbeitskammer 50b bewegt sich der zweite Kolben 46b nicht den gesamten Weg bis zum völligen Entspannen des Federelements 52 und zum Anliegen des zweiten Kolbens 46b an der Stirnwand 62 zurück, sondern lediglich einen relativ kurzen Weg, bis das Federelement 52 am Bund 66 anliegt. Die Federkraft wird von der Kolbenstange 64 und dem Bund 66 gehalten.

Das Zylinderelement 44 ist derart dimensioniert, dass der zweite Kolben 46b bei in den zweiten Schaltzustand geschalteter Kopplungseinrichtung 18, das heißt bei ausgekoppeltem zweitem Hydromotor 12b, ohne Federkraft durch das Federelement 52 stehen bleibt. Aufgrund der Vorspannung des Federelements 52 wird diese Stellung bereits vor dem völligen Entspannen des Federelements 52 erreicht, so dass das Zylinderelement 44 im Vergleich zum vorhergehenden Beispiel entsprechend kürzer ausgebildet werden kann. Wie in Fig. 3 weiterhin erkennbar ist, weist der zweite Kolben 46b eine Aufnahme 70 auf, in welcher die Kolbenstange 64 zumindest bereichsweise aufnehmbar ist. Auch hierdurch kann das Zylinderelement 44 im Vergleich zum vorhergehenden Beispiel entsprechend kürzer ausgebildet werden.

Prinzipiell eignet sich der beschriebene Schaltzylinder 40 nicht nur für die vorstehend beschriebene Kopplungseinrichtung 18, sondern kann unabhängig von diesem beispielsweise für Getriebe mit Lamellenkupplungen oder sonstige Anwendungen, bei denen eine Kupplung mit Reibelementen auch bei unterschiedlichen Druckverhältnissen stets mit der gleichen Kraft betätigt werden soll, verwendet werden. Es ist dabei grundsätzlich von Vorteil, wenn die Kolben 46a, 46b derart dimensioniert werden, dass sie auch bei der geringsten zu erwartenden Druckdifferenz ΔP=|P1-P2| das Federelement 52 ausreichend spannen und unter allen denkbaren Betriebszuständen zwischen ihren jeweiligen Endpositionen bewegt werden können.

## Patentansprüche

1. Antriebseinrichtung (10) für eine selbstfahrende Arbeitsmaschine, umfassend:
- einen ersten Hydromotor (12a), welcher mit einer Abtriebswelle (16) gekoppelt ist;
- einen zweiten Hydromotor (12b); und
- eine Kopplungseinrichtung (18), mittels welcher der zweite Hydromotor (12b) in einem ersten Schaltzustand zur Drehmomentenaddition mit der Abtriebswelle (16) koppelbar und in einem zweiten Schaltzustand von der Abtriebswelle (16) entkoppelbar ist,
wobei
die Kopplungseinrichtung (18):
- wenigstens einen mit dem zweiten Hydromotor (12b) gekoppelten Synchronisierungskörper (20) mit einer konusförmigen Reibfläche (22); und
- ein relativ zum Synchronisierungskörper (20) bewegbares und mit der Abtriebswelle (16) gekoppeltes Gangrad (24) mit einer korrespondierenden Reibfläche (26)
umfasst, wobei
- beim Koppeln des zweiten Hydromotors (12b) mit der Abtriebswelle (16) ein etwaiger Drehzahlunterschied zwischen dem Synchronisierungskörper (20) und dem Gangrad (24) zumindest reduzierbar und ein Reibschluss zwischen der Reibfläche (22) des Synchronisierungskörpers (20) und der Reibfläche (26) des Gangrads (24) durch relatives Bewegen des Synchronisierungskörpers (20) und des Gangrads (24) zueinander herstellbar ist; und
- beim Entkoppeln des zweiten Hydromotors (12b) von der Abtriebswelle (16) der Reibschluss zwischen der Reibfläche (22) des Synchronisierungskörpers (20) und der Reibfläche (26) des Gangrads (24) durch relatives Bewegen des Synchronisierungskörpers (20) und des Gangrads (24) voneinander weg aufhebbar ist,
**dadurch gekennzeichnet, dass**
die Kopplungseinrichtung (18) ausgebildet ist, den zweiten Hydromotor (12b) beim Schalten vom zweiten Schaltzustand in den ersten Schaltzustand vor der Herstellung des Reibschlusses zwischen dem Synchronisierungskörper (20) und dem Gangrad (24) zumindest auf eine vorgegebene Mindestdrehzahl zu beschleunigen.

2. Antriebseinrichtung (10) nach Anspruch 1,
**dadurch gekennzeichnet, dass**
der Synchronisierungskörper (20) und das Gangrad (24) miteinander korrespondierende Verzahnungen (36) umfassen, wobei die Verzahnungen (36) zumindest bei mit der Abtriebswelle (16) gekoppeltem zweitem Hydromotor (12b) miteinander im Eingriff sind.

3. Antriebseinrichtung (10) nach Anspruch 2,
**dadurch gekennzeichnet, dass**
die Kopplungseinrichtung (18) derart ausgebildet ist, dass ein Ineinandergreifen der Verzahnungen (36) beim Überschreiten einer vorgegebenen Drehzahldifferenz zwischen dem Synchronisierungskörper (20) und dem Gangrad (24) verunmöglicht ist.

4. Antriebseinrichtung (10) nach Anspruch 2 oder 3,
**dadurch gekennzeichnet, dass**
die Verzahnungen (36) als Klauenverzahnung, insbesondere mit hinterschnittenen Zähnen, ausgebildet sind.

5. Antriebseinrichtung (10) nach einem der Ansprüche 1 bis 4,
**dadurch gekennzeichnet, dass**
die Kopplungseinrichtung (18) einen Schaltzylinder (40) umfasst, mittels welchem der Synchronisierungskörper (20) und das Gangrad (24) relativ zueinander bewegbar sind.

6. Antriebseinrichtung (10) nach Anspruch 5,
**dadurch gekennzeichnet, dass**
der Schaltzylinder (40):
- ein einen Arbeitsraum (42) aufweisendes Zylinderelement (44),
- einen ersten und einen zweiten in dem Arbeitsraum (42) relativ zu diesem verschiebbar aufgenommenen Kolben (46a, 46b), durch welche der Arbeitsraum (42) in eine erste, über einen ersten Anschluss (48a) des Schaltzylinders (40) mit einem Arbeitsmedium beaufschlagbare Arbeitskammer (50a), eine zweite, über einen zweiten Anschluss (48b) des Schaltzylinders (40) mit einem Arbeitsmedium beaufschlagbare Arbeitskammer (50b) und eine dritte, zwischen der ersten und der zweiten Arbeitskammer (50a, 50b) angeordnete Arbeitskammer (50c) unterteilt ist, und
- zumindest ein einerseits an dem ersten Kolben (46a) und andererseits an dem zweiten Kolben (46b) abstützbares Federelement (52) umfasst, mittels welchem die Kolben (46a, 46b) gegenseitig kraftbeaufschlagbar sind, wobei
- dem ersten Kolben (46a) ein erster Anschlag (54a) des Schaltzylinders (40) zugeordnet ist, mittels welchem eine Bewegung des ersten Kolbens (46a) in Richtung des zweiten Kolbens (46b) begrenzt ist, und
- dem zweiten Kolben (46b) ein zweiter Anschlag (54b) des Schaltzylinders (40) zugeordnet ist, mittels welchem eine Bewegung des zweiten Kolbens (46b) in Richtung des ersten Kolbens (46a) begrenzt ist.

7. Antriebseinrichtung (10) nach einem der Ansprüche 1 bis 6,
**dadurch gekennzeichnet, dass**
zwischen dem Synchronisierungskörper (20) und dem Gangrad (24) mindestens ein Synchronisierungselement angeordnet ist, über welches der Reibschluss zwischen dem Synchronisierungskörper (20) und dem Gangrad (24) mittelbar erzeugbar ist.

8. Antriebseinrichtung (10) nach einem der Ansprüche 1 bis 7,
**dadurch gekennzeichnet, dass**
die Antriebseinrichtung (10) lediglich eine Pumpeinrichtung umfasst, mittels welcher beide Hydraulikmotoren (12a, 12b) und/oder die Kopplungseinrichtung (18) mit Arbeitsmedium zu versorgen sind und/oder dass der erste und der zweite Hydromotor (12a, 12b) hydraulisch parallel geschaltet sind.

9. Antriebseinrichtung (10) nach einem der Ansprüche 1 bis 8,
**dadurch gekennzeichnet, dass**
der Synchronisierungskörper (20) auf seiner dem Gangrad (24) abgewandten Seite eine weitere Reibfläche (28) aufweist, welche in Anlage mit einer korrespondierenden Reibfläche (30) eines bezüglich der Antriebseinrichtung (10) drehfesten Gehäuses (32) bringbar ist.

10. Arbeitsmaschine, insbesondere landgebundene, selbstfahrende Arbeitsmaschine, mit einer Antriebseinrichtung (10) nach einem der Ansprüche 1 bis 9.

11. Verfahren zum Betreiben einer Antriebseinrichtung (10) einer selbstfahrenden Arbeitsmaschine, wobei die Antriebseinrichtung (10):
- einen ersten Hydromotor (12a), welcher zum Antreiben der Arbeitsmaschine mit einer mit einer Achse der Arbeitsmaschine gekoppelten Abtriebswelle (16) gekoppelt ist;
- einen zweiten Hydromotor (12b); und
- eine Kopplungseinrichtung (18), mittels welcher der zweite Hydromotor (12b) in einem ersten Schaltzustand zur Drehmomentenaddition mit der Abtriebswelle (16) gekoppelt und in einem zweiten Schaltzustand von der Abtriebswelle (16) entkoppelt wird,
umfasst, wobei die Kopplungseinrichtung (18):
- wenigstens einen mit dem zweiten Hydromotor (12b) gekoppelten Synchronisierungskörper (20) mit einer konusförmigen Reibfläche (22); und
- ein relativ zum Synchronisierungskörper (20) bewegbares und mit der Abtriebswelle (16) gekoppeltes Gangrad (24) mit einer korrespondierenden Reibfläche (26)
umfasst, wobei
- beim Schalten der Kopplungseinrichtung (18) vom zweiten in den ersten Schaltzustand der Synchronisierungskörper (20) und das Gangrad (24) relativ zueinander bewegt, ein etwaiger Drehzahlunterschied zwischen dem Synchronisierungskörper (20) und dem Gangrad (24) zumindest reduziert und ein Reibschluss zwischen der Reibfläche (22) des Synchronisierungskörpers (20) und der Reibfläche (26) des Gangrads (24) hergestellt wird; und
- beim Schalten der Kopplungseinrichtung (18) vom ersten in den zweiten Schaltzustand der Synchronisierungskörper (20) und das Gangrad (24) relativ voneinander wegbewegt und der Reibschluss zwischen der Reibfläche (22) des Synchronisierungskörpers (20) und der Reibfläche (26) des Gangrads (24) aufgehoben wird
**dadurch gekennzeichnet, dass**
die Kopplungseinrichtung (18) den zweiten Hydromotor (12b) beim Schalten vom zweiten Schaltzustand in den ersten Schaltzustand vor der Herstellung des Reibschlusses zwischen dem Synchronisierungskörper (20) und dem Gangrad (24) zumindest auf eine vorgegebene Mindestdrehzahl beschleunigt.

12. Verfahren nach Anspruch 11,
**dadurch gekennzeichnet, dass**
beim Schalten der Kopplungseinrichtung (18) vom zweiten in den ersten Schaltzustand miteinander korrespondierende Verzahnungen (36) des Synchronisierungskörpers (20) und des Gangrads (24) miteinander im Eingriff gebracht werden und/oder dass beim Schalten der Kopplungseinrichtung (18) vom ersten in den zweiten Schaltzustand die miteinander korrespondierenden Verzahnungen (36) des Synchronisierungskörpers (20) und des Gangrads (24) außer Eingriff gebracht werden.

13. Verfahren nach Anspruch 11 oder 12,
**dadurch gekennzeichnet, dass**
die Kopplungseinrichtung (18) einen Schaltzylinder (40) umfasst, mittels welchem der Synchronisierungskörper (20) und das Gangrad (24) relativ zueinander bewegt werden.

## Claims

1. Drive device (10) for an automotive work machine, including:
- a first hydraulic motor (12a) coupled to a driven shaft (16);
- a second hydraulic motor (12b); and
- a coupling device (18), by means of which the second hydraulic motor (12b) can be coupled to the driven shaft (16) for torque addition in a first shift state and can be decoupled from the driven shaft (16) in a second shift state,
wherein
the coupling device (18) includes:
- at least one synchronizing body (20) with a conical friction surface (22) coupled to the second hydraulic motor (12b); and
- a gear wheel (24) with a corresponding friction surface (26) movable relatively to the synchronizing body (20) and coupled to the driven shaft (16),
wherein
- upon coupling the second hydraulic motor (12b) to the driven shaft (16), a possible rotation speed difference between the synchronizing body (20) and the gear wheel (24) can be at least reduced and a frictional fit between the friction surface (22) of the synchronizing body (20) and the friction surface (26) of the gear wheel (24) can be established by relatively moving the synchronizing body (20) and the gear wheel (24) to each other; and
- upon decoupling the second hydraulic motor (12b) from the driven shaft (16), the frictional fit between the friction surface (22) of the synchronizing body (20) and the friction surface (26) of the gear wheel (24) can be cancelled by relatively moving the synchronizing body (20) and the gear wheel (24) away from each other
**characterized in that**
the coupling device (18) is configured to accelerate the second hydraulic motor (12b) at least to a preset minimum rotation speed upon shifting from the second shift state into the first shift state, before establishing the frictional fit between the synchronizing body (20) and the gear wheel (24).

2. Drive device (10) according to claim 1,
**characterized in that**
the synchronizing body (20) and the gear wheel (24) include toothings (36) corresponding with each other, wherein the toothings (36) are engaged with each other at least with the second hydraulic motor (12b) coupled to the driven shaft (16).

3. Drive device (10) according to claim 2,
**characterized in that**
the coupling device (18) is formed such that intermeshing of the toothings (36) upon exceeding a preset rotation speed difference between the synchronizing body (20) and the gear wheel (24) is made impossible.

4. Drive device (10) according to claim 2 or 3,
**characterized in that**
the toothings (36) are formed as claw toothing, in particular with undercut teeth.

5. Drive device (10) according to any one of claims 1 to 4,
**characterized in that**
the coupling device (18) includes a shift cylinder (40), by means of which the synchronizing body (20) and the gear wheel (24) are movable relatively to each other.

6. Drive device (10) according to claim 5,
**characterized in that**
the shift cylinder (40) includes:
- a cylinder element (44) having a working space (42),
- a first and a second piston (46a, 46b) received in the working space (42) displaceable relative to it, by which the working space (42) is divided into a first working chamber (50a) being able to be loaded with a working medium via a first connection (48a) of the shift cylinder (40), a second working chamber (50b) being able to be loaded with a working medium via a second connection (48b) of the shift cylinder (40), and a third working chamber (50c) disposed between the first and the second working chamber (50a, 50b), and
- at least one spring element (52) being able to be supported on the first piston (46a) on the one hand and on the second piston (46b) on the other hand, by means of which the pistons (46a, 46b) can be mutually loaded with force, wherein
- a first stop (54a) of the shift cylinder (40) is associated with the first piston (46a), by means of which movement of the first piston (46a) towards the second piston (46b) is limited, and
- a second stop (54b) of the shift cylinder (40) is associated with the second piston (46b), by means of which movement of the second piston (46b) towards the first piston (46a) is limited.

7. Drive device (10) according to any one of claims 1 to 6,
**characterized in that**
between the synchronizing body (20) and the gear wheel (24), at least one synchronizing element is disposed, via which the frictional fit between the synchronizing body (20) and the gear wheel (24) can be indirectly generated.

8. Drive device (10) according to any one of claims 1 to 7,
**characterized in that**
the drive device (10) includes only one pumping device, by means of which both hydraulic motors (12a, 12b) and/or the coupling device (18) are to be supplied with working medium and/or that the first and the second hydraulic motor (12a, 12b) are hydraulically connected in parallel.

9. Drive device (10) according to any one of claims 1 to 8,
**characterized in that**
the synchronizing body (20) has a further friction surface (28) on its side facing away from the gear wheel (24), which can be brought into abutment on a corresponding friction surface (30) of a case (32) rotationally fixed with respect to the drive device (10).

10. Work machine, in particular land-based, automotive work machine, including a drive device (10) according to any one of claims 1 to 9.

11. Method for operating a drive device (10) of an automotive work machine, wherein the drive device (10) includes:
- a first hydraulic motor (12a) coupled to a driven shaft (16) coupled to an axle of the work machine for driving the work machine;
- a second hydraulic motor (12b); and
- a coupling device (18), by means of which the second hydraulic motor (12b) is coupled to the driven shaft (16) for torque addition in a first shift state and is decoupled from the driven shaft (16) in a second shift state,
wherein the coupling device (18) includes:
- at least one synchronizing body (20) with a conical friction surface (22) coupled to the second hydraulic motor (12b); and
- a gear wheel (24) with a corresponding friction surface (26) movable relatively to the synchronizing body (20) and coupled to the driven shaft (16),
wherein
- upon shifting the coupling device (18) from the second into the first shift state, the synchronizing body (20) and the gear wheel (24) are moved relatively to each other, a possible rotation speed difference between the synchronizing body (20) and the gear wheel (24) is at least reduced and a frictional fit between the friction surface (22) of the synchronizing body (20) and the friction surface (26) of the gear wheel (24) is established; and
- upon shifting the coupling device (18) from the first into the second shift state, the synchronizing body (20) and the gear wheel (24) are moved relatively away from each other and the frictional fit between the friction surface (22) of the synchronizing body (20) and the friction surface (26) of the gear wheel (24) is cancelled,
**characterized in that**
the coupling device (18) accelerates the second hydraulic motor (12b) at least to a preset minimum rotation speed upon shifting from the second shift state into the first shift state, preferably before establishing the frictional fit between the synchronizing body (20) and the gear wheel (24).

12. Method according to claim 11,
**characterized in that**
upon shifting the coupling device (18) from the second into the first shift state, toothings (36) of the synchronizing body (20) and the gear wheel (24) corresponding with each other are engaged with each other and/or that upon shifting the coupling device (18) from the first into the second shift state the toothings (36) of the synchronizing body (20) and the gear wheel (24) corresponding with each other are disengaged from each other.

13. Method according to claim 11 or 12,
**characterized in that**
the coupling device (18) includes a shift cylinder (40), by means of which the synchronizing body (20) and the gear wheel (24) are moved relatively to each other.

## Revendications

1. Dispositif d'entraînement (10) pour une machine de travail automotrice, comprenant :
- un premier moteur hydraulique (12a), lequel est couplé avec un arbre de sortie (16) ;
- un second moteur hydraulique (12b) et
- un dispositif de couplage (18), au moyen duquel le second moteur hydraulique (12b) peut être couplé, dans un premier état de commutation, par rapport à l'addition des couples de rotation, avec l'arbre de sortie (16) et peut être découplé, dans un second état de commutation, de l'arbre de sortie (16),
le dispositif de couplage (18) comprenant :
- au moins un anneau de synchronisation (20), couplé au second moteur hydraulique (12b), avec une surface de frottement en forme de cône (22) et
- un pignon de rapport (24), mobile par rapport à l'anneau de synchronisation (20) et couplé avec l'arbre de sortie (16), avec une surface de frottement (26) correspondante,
- une éventuelle différence de vitesse de rotation entre l'anneau de synchronisation (20) et le pignon de rapport (24) pouvant au moins être réduite, lors du couplage du second moteur hydraulique (12b) avec l'arbre de sortie (16) et une liaison à friction pouvant être établie entre la surface de frottement (22) de l'anneau de synchronisation (20) et la surface de frottement (26) du pignon de rapport (24), par un déplacement relatif de l'anneau de synchronisation (20) et du pignon de rapport (24) l'un par rapport à l'autre et
- la liaison à friction entre la surface de frottement (22) de l'anneau de synchronisation (20) et la surface de frottement (26) du pignon de rapport (24) pouvant être supprimée, lors du découplage du second moteur hydraulique (12b) de l'arbre de sortie (16), par un déplacement relatif de l'anneau de synchronisation (20) et du pignon de rapport (24) à distance l'un de l'autre,
**caractérisé en ce que**
le dispositif de couplage (18) est constitué pour accélérer le second moteur hydraulique (12b), lors de la commutation du second état de commutation dans le premier état de commutation, avant l'établissement de la liaison à friction entre l'anneau de synchronisation (20) et le pignon de rapport (24) au moins sur une vitesse de rotation minimale prédéterminée.

2. Dispositif d'entraînement (10) selon la revendication 1,
**caractérisé en ce que**
l'anneau de synchronisation (20) et le pignon de rapport (24) comprennent des dentures (36), correspondant l'une avec l'autre, les dentures (36) étant en prise l'une avec l'autre au moins pour le second moteur hydraulique (12b), couplé avec l'arbre de sortie (16).

3. Dispositif d'entraînement (10) selon la revendication 2,
**caractérisé en ce que**
le dispositif de couplage (18) est constitué de telle sorte qu'un engrènement des dentures (36), lors d'un dépassement d'une différence de vitesse de rotation prédéterminée entre l'anneau de synchronisation (20) et le pignon de rapport (24), est rendu impossible.

4. Dispositif d'entraînement (10) selon la revendication 2 ou 3,
**caractérisé en ce que**
les dentures (36) sont constituées en tant que denture à crabots, en particulier avec des dents contre-dépouillées.

5. Dispositif d'entraînement (10) selon l'une des revendications 1 à 4,
**caractérisé en ce que**
le dispositif de couplage (18) comprend un vérin de commutation (40), au moyen duquel l'anneau de synchronisation (20) et le pignon de rapport (24) sont mobiles l'un par rapport à l'autre.

6. Dispositif d'entraînement (10) selon la revendication 5,
**caractérisé en ce que**
le vérin de commutation (40) comprend :
- un élément de vérin (44), présentant une chambre de travail (42),
- un premier et un second piston (46a, 46b), logés dans la chambre de travail (42) de manière coulissable par rapport à celle-ci, par le biais desquels la chambre de travail (42) est divisée en une première chambre de travail (50a), pouvant être alimentée par l'intermédiaire d'un premier raccordement (48a) du vérin de commutation (40), avec un fluide de travail, une seconde chambre de travail (50b), pouvant être alimentée par l'intermédiaire d'un second raccordement (48b) du vérin de commutation (40), avec un fluide de travail et une troisième chambre de travail (50c), agencée entre la première et la seconde chambre de travail (50a, 50b) et
- au moins un élément de suspension (52), pouvant être appuyé d'une part sur le premier piston (46a) et d'autre part sur le second piston (46b), au moyen duquel les pistons (46a, 46b) peuvent être alimentés mutuellement sous l'effet d'une force,
- une première butée (54a) du vérin de commutation (40) étant affectée au premier piston (46a), au moyen de laquelle un mouvement du premier piston (46a) dans la direction du second piston (46b) est limité et
- une seconde butée (54b) du vérin de commutation (40) étant affectée au second piston (46b), au moyen de laquelle un mouvement du second piston (46b) dans la direction du premier piston (46a) est limité.

7. Dispositif d'entraînement (10) selon l'une des revendications 1 à 6,
**caractérisé en ce que**,
entre l'anneau de synchronisation (20) et le pignon de rapport (24), au moins un élément de synchronisation est agencé, par l'intermédiaire duquel la liaison à friction entre l'anneau de synchronisation (20) et le pignon de rapport (24) peut être produite indirectement.

8. Dispositif d'entraînement (10) selon l'une des revendications 1 à 7,
**caractérisé en ce que**
le dispositif d'entraînement (10) comprend uniquement un dispositif de pompage, au moyen duquel les deux moteurs hydrauliques (12a, 12b) et / ou le dispositif de couplage (18) doivent être approvisionnés en fluide de travail et / ou **en ce que** le premier et le second moteur hydraulique (12a, 12b) sont montés en parallèle.

9. Dispositif d'entraînement (10) selon l'une des revendications 1 à 8,
**caractérisé en ce que**
l'anneau de synchronisation (20) présente, sur son côté détourné du pignon de rapport (24), une autre surface de frottement (28), qui peut être mise en contact avec une surface de frottement (30) correspondante d'un boîtier solidaire en rotation (32) par rapport au dispositif d'entraînement (10).

10. Machine de travail, en particulier machine de travail automotrice, terrestre, avec un dispositif d'entraînement (10), selon l'une des revendications 1 à 9.

11. Procédé d'exploitation d'un dispositif d'entraînement (10) d'une machine de travail automotrice, le dispositif d'entraînement (10) comprenant :
- un premier moteur hydraulique (12a), lequel est couplé, pour entraîner la machine de travail, avec un arbre de sortie (16), couplé avec un axe de la machine de travail ;
- un second moteur hydraulique (12b) et
- un dispositif de couplage (18), au moyen duquel le second moteur hydraulique (12b) est couplé, dans un premier état de commutation et dans le but de l'addition des couples de rotation, avec l'arbre de sortie (16) et est découplé, dans un second état de commutation, de l'arbre de sortie (16),
le dispositif de couplage (18) comprenant :
- au moins un anneau de synchronisation (20), couplé avec le second moteur hydraulique (12b), avec une surface de frottement en forme de cône (22) et
- un pignon de rapport (24), mobile par rapport à l'anneau de synchronisation (20) et couplé avec l'arbre de sortie (16), avec une surface de frottement (26) correspondante,
- l'anneau de synchronisation (20) et le pignon de rapport (24) étant déplacés l'un par rapport à l'autre, lors de la commutation du dispositif de couplage (18) du second dans le premier état de commutation, une éventuelle différence de vitesse de rotation entre l'anneau de synchronisation (20) et le pignon de rapport (24) étant au moins réduite et une liaison à friction entre la surface de frottement (22) de l'anneau de synchronisation (20) et la surface de frottement (26) du pignon de rapport (24) étant établie et
- l'anneau de synchronisation (20) et le pignon de rapport (24) étant éloignés l'un par rapport à l'autre, lors de la commutation du dispositif de couplage (18), du premier dans le second état de commutation et la liaison à friction entre la surface de frottement (22) de l'anneau de synchronisation (20) et la surface de frottement (26) du pignon de rapport (24) étant supprimée,
**caractérisé en ce que**
le dispositif de couplage (18) accélère le second moteur hydraulique (12b), lors de la commutation du second état de commutation dans le premier état de commutation, avant l'établissement de la liaison à friction entre l'anneau de synchronisation (20) et le pignon de rapport (24) au moins sur une vitesse de rotation minimale prédéterminée.

12. Procédé selon la revendication 11,
**caractérisé en ce que**
des dentures (36), correspondant l'une avec l'autre, de l'anneau de synchronisation (20) et du pignon de rapport (24) sont mises en prise l'une avec l'autre, lors de la commutation du dispositif de couplage (18) du second dans le premier état de commutation et / ou **en ce que** les dentures (36), correspondant l'une avec l'autre, de l'anneau de synchronisation (20) et du pignon de rapport (24) sont mises hors prise, lors de la commutation du dispositif de couplage (18) du premier dans le second état de commutation.

13. Procédé selon la revendication 11 ou 12,
**caractérisé en ce que**
le dispositif de couplage (18) comprend un vérin de commutation (40), au moyen duquel l'anneau de synchronisation (20) et le pignon de rapport (24) sont déplacés l'un par rapport à l'autre.
